# EUROPEAN PATENT APPLICATION

(11) **EP 4 439 829 A1**
(43) Date of publication of application: **02.10.2024**
(21) Application number: 24166080.2
(22) Date of filing: 25.03.2024
(51) Int. Cl.: H01M 50/213, H01M 50/503, H01M 50/505

(54) **BATTERY PACK**

(30) Priority: 26.03.2023 KR 20230039403; 27.07.2023 KR 20230098444
(71) Applicant: Samsung SDI Co., Ltd., Yongin-si, Gyeonggi-do 17084 (KR)
(72) Inventor: PARK, Daeyeop, 17084 Yongin-si (KR); KWAG, Nohyun, 17084 Yongin-si (KR)
(74) Representative: Marks & Clerk LLP

(57) **Abstract**

A battery pack includes battery cells, a bus bar on the battery cells and electrically connecting at least some of the battery cells to each other, the bus bar having a cross-section including transverse edges, and the transverse edges corresponding to upper and lower surfaces opposite to each other and first and second sides opposite to each other and connecting the upper and lower surfaces, and a cell holder accommodating the battery cells, the bus bar extending across the cell holder, and the cell holder including a holding unit that defines a covered position and an exposed position alternating along a length of the bus bar, the holding unit surrounding four transverse edges of the bus bar to define the covered position, and surrounding three transverse edges of the bus bar to define the exposed position.

## Description

### BACKGROUND

### 1. Field

One or more embodiments relate to a battery pack.

### 2. Description of the Related Art

Typically, secondary batteries are batteries that can be charged and discharged, unlike primary batteries that cannot be recharged. Secondary batteries may be used as an energy source for mobile devices, electric vehicles, hybrid vehicles, electric bicycles, and uninterruptible power supplies, and may be used in the form of a single battery (depending on the type of external devices to which they are applied) or in the form of packs in which multiple batteries are connected and bundled into one unit.

Small mobile devices, e.g., mobile phones, can operate for a certain period of time with the output and capacity of a single battery. However, when a long-term operation or a high-power operation is required, e.g., large mobile devices including laptops or electric or hybrid vehicles that consume a lot of power, a pack containing multiple batteries is preferred, in order to increase output and capacity, e.g., where the output voltage or output current can be increased depending on the number of built-in batteries.

### SUMMARY

According to one or more embodiments, a battery pack includes a plurality of battery cells, a bus bar placed on the plurality of battery cells and configured to electrically connect different battery cells to each other, wherein the bus bar has a cross-section including transverse edges including opposing upper and lower surfaces, and first and second sides connecting the opposing upper and lower surfaces, and a cell holder into which the plurality of battery cells are fitted, the cell holder having a covered position and an exposed position alternately formed along the length of the bus bar extending across the cell holder, wherein the cell holder includes a holding unit surrounding four transverse edges of the bus bar at the covered position, and surrounding three transverse edges of the bus bar at the exposed position.

For example, the cross-section of the bus bar crossing the longitudinal direction of the bus bar may include four transverse edges including the upper and lower surfaces and the first and second sides connecting the upper and lower surfaces.

For example, the holding unit may surround the transverse edges of the bus bar at the covered position and the exposed position.

For example, the bus bar may be fixed in position together with the cell holder within the holding unit through insert injection molding.

For example, the holding unit at the covered position may include a lower member supporting the lower surface of the bus bar, first and second side ribs that protrude from both sides of the lower member to face each other and cover the first and second sides of the bus bar, and an upper member extending across the upper surface of the bus bar between the first and second side ribs.

For example, the lower member, the first and second side ribs, and the upper member may continuously surround the transverse edges of the bus bar at the covered position.

For example, the holding unit at the covered position may restrain the position of the bus bar in a vertical direction in which the upper surface and the lower surface of the bus bar face each other and a horizontal direction in which the first and second sides of the bus bar face each other.

For example, the upper member may expose a portion of the upper surface of the bus bar at the covered position.

For example, the upper member may extend across the upper surface of the bus bar in a width direction intersecting the longitudinal direction of the bus bar.

For example, the upper member may be connected to only one of the first and second side ribs and may expose a portion of the upper surface of the bus bar through a gap formed between the upper member and the other one of the first and second side ribs.

For example, the upper member may cover the entire upper surface of the bus bar at the covered position.

For example, the upper member may cover the upper surface of the bus bar while following the upper surface of the bus bar so as to extend along the length of the bus bar.

For example, the holding unit at the exposed position may include a lower member supporting the lower surface of the bus bar, and first and second side ribs that protrude from both sides of the lower member to face each other and cover the first and second sides of the bus bar.

For example, the lower member and the first and second side ribs may continuously surround the transverse edges of the bus bar at the exposed position.

For example, the holding unit at the exposed position may restrain the position of the bus bar in the horizontal direction in which the first and second sides face each other.

For example, the holding unit at the exposed position may expose the upper surface of the bus bar between the first and second side ribs.

For example, a connecting member connected to the battery cells may be connected to the upper surface of the bus bar exposed by the holding unit at the exposed position.

For example, the bus bar may form a connection with the connecting member electrically connected to the battery cells through the exposed position among the covered position and the exposed position which are alternately formed along the length of the bus bar.

For example, the bus bar may include a first covered position, a second covered position and an exposed position along the length of the bus bar extending across the cell holder, the holding unit at the first covered position may cover the entire upper surface of the bus bar, the holding unit at the second covered position may expose a portion of the upper surface of the bus bar, and the holding unit at the exposed position may expose the entire upper surface of the bus bar.

For example, the holding unit at the first and second covered positions may include a lower member supporting the lower surface of the bus bar, first and second side ribs that protrude from both sides of the lower member to face each other and cover the first and second sides of the bus bar, and an upper member extending across the upper surface of the bus bar between the first and second side ribs, wherein the upper member at the first and second covered positions may be connected to both the first and second side ribs.

For example, the upper member at the first and second covered positions may cover the upper surface of the bus bar while following the upper surface of the bus bar so as to extend along the length of the bus bar, and the upper member at the second covered position may include a jig hole formed between the first and second side ribs, and may expose a portion of the upper surface of the bus bar through the jig hole.

For example, the plurality of battery cells may include a plurality of rows of battery cells each arranged in a first direction, battery cells in adjacent rows in a second direction intersecting the first direction may be alternately biased toward a front position and a rear position in the first direction, battery cells in a row arranged in the first direction may be positioned in a valley between the battery cells in adjacent rows in the second direction, and the bus bar may extend in a zigzag shape while alternately surrounding outer peripheral surfaces of the battery cells in adjacent rows along spaces between the battery cells in adjacent rows in the second direction.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1 is an exploded perspective view of a battery pack according to embodiments of the disclosure;
FIG. 2 is a cross-sectional view of a bus bar taken along a direction intersecting the longitudinal direction of the bus bar shown in FIG. 1;
FIG. 3 is a plan view of the battery pack shown in FIG. 1;
FIG. 4 is an enlarged view of area IV of FIG. 3 for explaining a covered position and an exposed position along the length of a bus bar;
FIGS. 5A and 5B are cross-sectional views of a holding unit at the covered position taken along line A1-A1 of FIG. 4, and a holding unit at the exposed position taken along line B1-B1 of FIG. 4, respectively;
FIG. 6 is an enlarged view of area VI of FIG. 3 for explaining first through third covered positions and an exposed position along the length of a bus bar;
FIGS. 7A to 7D are cross-sectional views of a holding unit at a first covered position taken along line A2-A2, a holding unit at a second covered position taken along line B2-B2, a holding unit at an exposed position taken along line C2-C2, and a holding unit at a third covered position PC3 taken along line D2-D2 of FIG. 6;
FIG. 8 is a perspective view illustrating bending deformation due to insert injection molding of different materials including a first material of the bus bar and a second material of the cell holder;
FIG. 9 is a cross-sectional view showing the difference in thermal contraction behavior between different materials including the first material of the bus bar in the upper position and the second material of the cell holder in the lower position, which causes bending deformation in the insert injection molded cell holder; and
FIG. 10 is a diagram for explaining a third embodiment of the disclosure including an arrangement of bus bar segments interrupted intermittently by break spaces along the length of the bus bar extending across the cell holder.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. Expressions such as "at least one of," when preceding a list of elements, modify the entire list of elements and do not modify the individual elements of the list.

Hereinafter, a battery pack according to embodiments of the disclosure will be described with reference to the drawings attached to this specification.

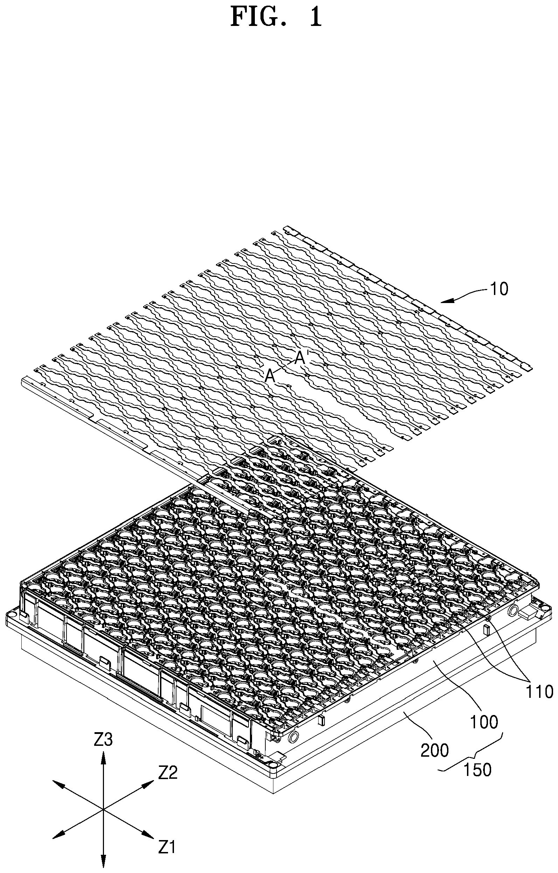

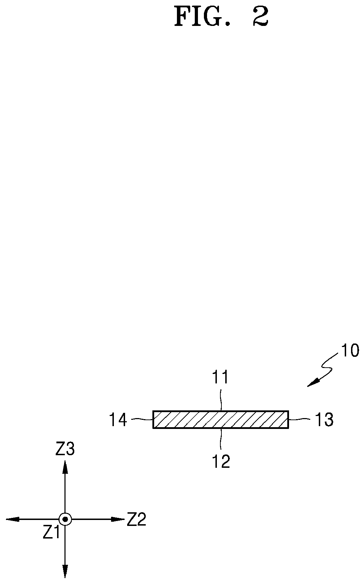

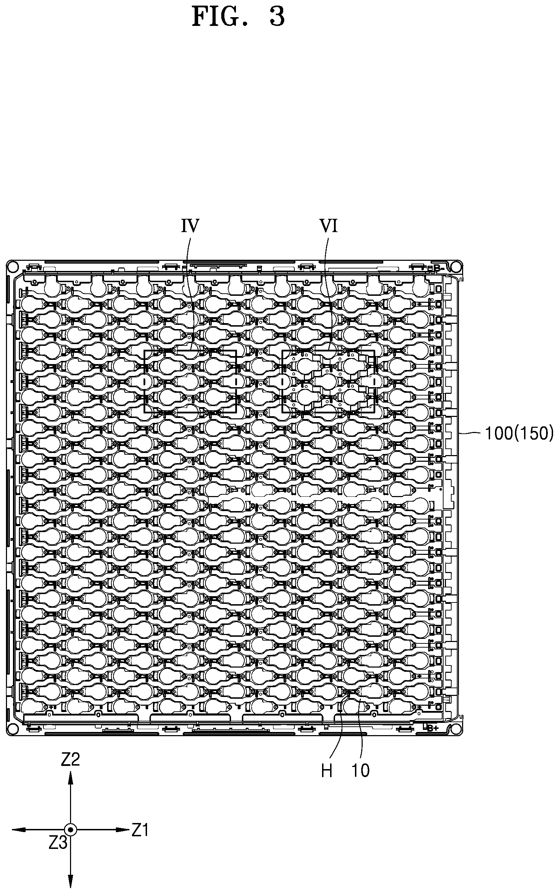

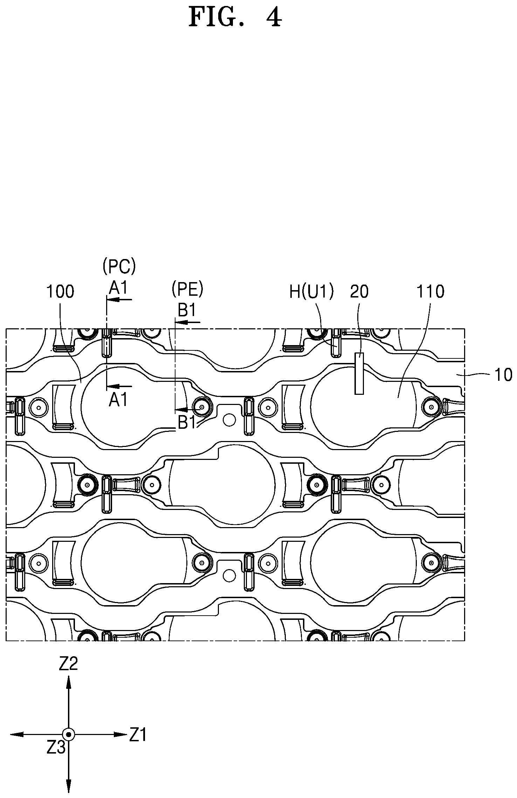

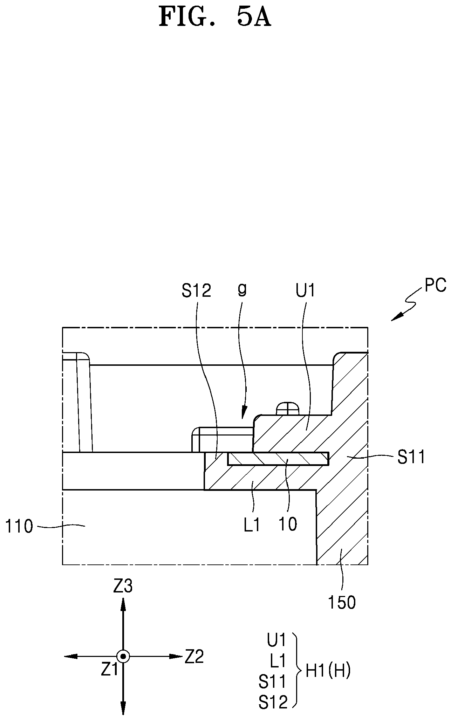

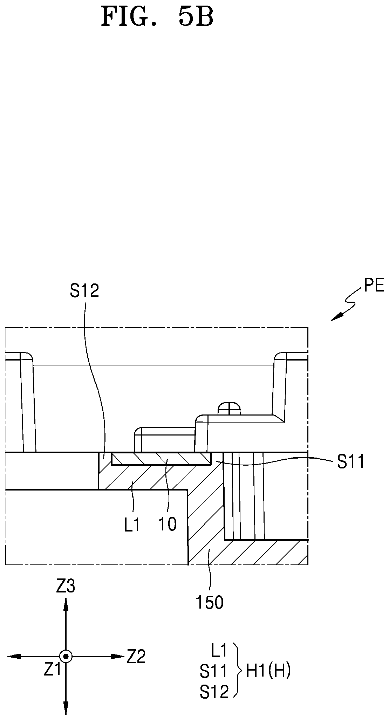

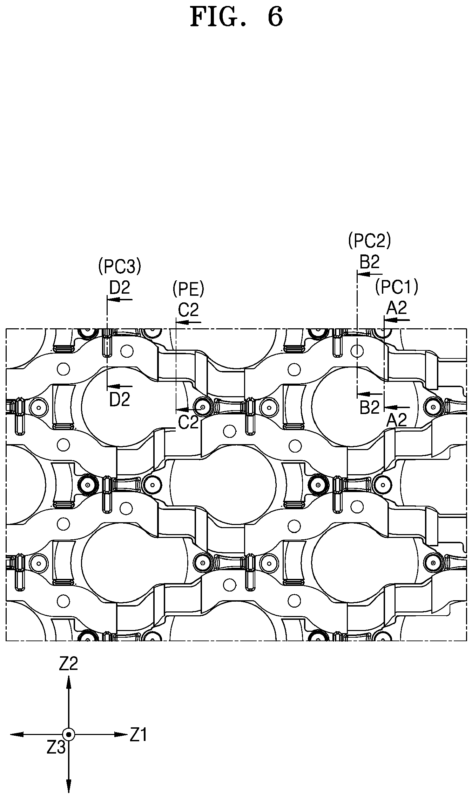

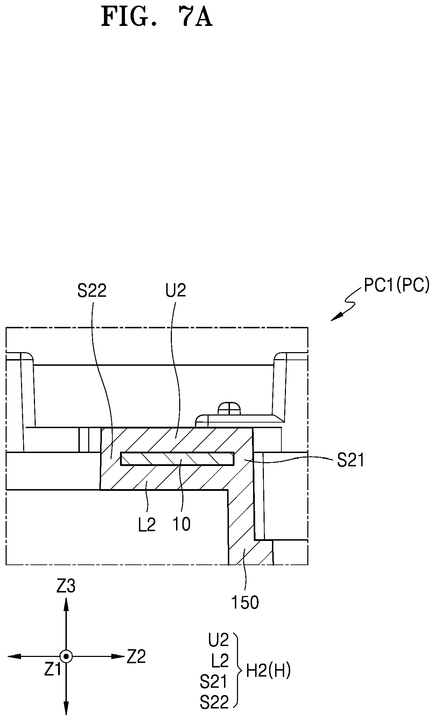

FIG. 1 is an exploded perspective view of a battery pack according to embodiments of the disclosure. FIG. 2 is a cross-sectional view of a bus bar 10 taken along line A-A' of FIG. 1. FIG. 3 is a plan view of the battery pack shown in FIG. 1. FIG. 4 is an enlarged view of area IV of FIG. 3 for explaining a first embodiment of the disclosure including a covered position PC and an exposed position PE along the length of the bus bar 10. FIGS. 5A and 5B are cross-sectional views of a holding unit H at the covered position PC taken along line A1-A1 of FIG. 4, and a holding unit H at the exposed position PE taken along line B1-B1 of FIG. 4, respectively. FIG. 6 is an enlarged view of position VI of FIG. 3 for explaining a second embodiment of the disclosure including a first covered position PC1, a second covered position PC2, a third covered position PC3, and an exposed position PE along the length of the bus bar 10. FIGS. 7A to 7D are cross-sectional views of a holding unit H at the first covered position PC1 taken along line A2-A2, a holding unit H at the second covered position PC2 taken along line B2-B2, a holding unit H at the exposed position PE taken along line C2-C2, and a holding unit H at the third covered position PC3 taken along line D2-D2 of FIG. 6.

Referring to FIGS. 1 to 7D, a battery pack according to embodiments of the disclosure may include a plurality of battery cells 110, a bus bar 10 placed on the plurality of battery cells 110 to electrically connect different battery cells 110 to each other, the bus bar 10 having a cross-section with transverse edges including opposing upper and lower surfaces 11 and 12 and opposing first and second sides 13 and 14 connecting the opposing upper and lower surfaces 11 and 12, and a cell holder 150 into which the plurality of battery cells 110 are fitted. The cell holder 150 may have (e.g., define) a covered position PC and an exposed position PE alternately formed in the longitudinal direction of the bus bar 10 extending across the cell holder 150, wherein the cell holder 150 may include a holding unit H (e.g., a holder) surrounding four transverse edges of the bus bar 10 in the covered position PC, and three transverse edges of the bus bar 10 in the exposed position PE.

For example, as illustrated in FIG. 1, the bus bar 10 may include a plurality of linear portions extending, e.g., lengthwise, in a first direction Z1, and being spaced apart from each other in a second direction Z2. For example, as further illustrated in FIG. 1, each of the linear portions of the bus bar 10 may extend, e.g., lengthwise and continuously, along a row of battery cells 110 in the first direction Z1 to electrically connect the battery cells within a same row to each other.

For example, as illustrated in FIG. 2, a cross-section of the bus bar 10 crossing the longitudinal direction of the bus bar 10 (e.g., a cross-section of a single linear portion of the bus bar 10 in the second direction Z2) may include four transverse (e.g., perpendicular) edges including the upper surface 11 and the lower surface 12 (which are opposite to each other), and the first and second sides 13 and 14 (which are opposite to each other) connecting the upper surface 11 to the lower surface 12. For example, the bus bar 10 may have a quadrangular cross-sectional shape in the second direction Z2, e.g., a single linear portion of the bus bar 10 may be formed to have a substantially square or rectangular cross-section.

In embodiments of the disclosure, as illustrated in FIGS. 1 and 3, the cell holder 150 may accommodate the plurality of battery cells 110, and may surround the bus bar 10, e.g., surround the transverse edges of the bus bar 10, at the covered position PC and the exposed position PE. The bus bar 10 may be fixed in position together with the cell holder 150 within a holding unit H through insert injection molding, e.g., the bus bar 10 may be affixed (e.g., attached) in a fixed position together with the cell holder 150 via a holding unit H through insert injection molding.

In detail, as illustrated in FIG. 1, the cell holder 150 may include an upper holder 100 and a lower holder 200 that are assembled to face each other in the third direction Z3 (e.g., on top of each other) with the battery cells 110 positioned therebetween. For example, the upper holder 100 may continuously surround a top portion of each of the plurality of battery cells 110 to support the battery cells 110 (e.g., the upper holder 100 may include an assembly rib at least partially surrounding a top portion of each of the plurality of battery cells 110). For example, the linear portions of the bus bar 10 may be positioned on portions of the upper holder 100 between rows of the battery cells 110. Further, as illustrated in FIGS. 1 and 3, the cell holder 150 may include the holding unit H extending from portions of the upper holder 100 toward the battery cells 110, as will be described in more detail below.

For example, as illustrated in FIG. 4, the cell holder 150 may define the covered position PC and the exposed position PE formed alternately in the longitudinal direction of the bus bar 10 (e.g., along the first direction Z1) extending across the cell holder 150. That is, the cell holder 150 may include the holding unit H extending toward the bus bar 10, such that the holding unit H surrounds more portions of the bus bar 10 in the covered position PC than in the exposed position PE. As illustrated in FIGS. 5A and 5B, the holding unit H may surround four transverse edges of the bus bar 10 in the covered position PC, and may surround three transverse edges of the bus bar 10 in the exposed position PE. For example, referring to FIGS. 4-5B, the holding unit H may include a continuous bottom portion under the bus bar 10 (e.g., under the entire length of the bus bar 10 in the first direction Z1) and intermittent (e.g., discrete or discontinuous) top portions above the bus bar 10, e.g., the top portions may be spaced apart from each other along the length direction of the bus bar 10.

In detail, referring to FIGS. 4 and 5A, the holding unit H at the covered position PC may include a lower member L1 supporting the lower surface 12 of the bus bar 10, first and second side ribs S11 and S12 which protrude from both sides of the lower member L1 to face each other and cover the first and second sides 13 and 14 of the bus bar 10, and an upper member U1 extending across the upper surface 11 of the bus bar 10 between the first and second side ribs S11 and S12. The lower member L1, the first and second side ribs S11 and S12, and the upper members U1 may continuously surround the transverse edges of the bus bar 10 at the covered position PC. For example, the lower member L1, the first and second side ribs S11 and S12, and the upper members U1 may be integral with each other (e.g., formed of a same material as a single and seamless structure), and may continuously surround the transverse edges (e.g., four different surfaces that are perpendicular to each other) of the bus bar 10 at the covered position PC.

Referring to FIGS. 4 and 5A, in a first embodiment of the disclosure, the upper member U1 may expose a portion of the upper surface 11 of the bus bar 10 at the covered position PC. For example, the upper member U1 may extend across the upper surface 11 of the bus bar 10 in a width direction intersecting the longitudinal direction of the bus bar 10, and may extend from the first side rib S11 toward the second side rib S12 facing the first side rib S11. As the upper member U1 extending from the first side rib S11 does not extend to directly contact the second side rib S12, but extends only to a position where a gap g is secured between the second side rib S12 and the upper member U1, a portion of the upper surface 11 of the bus bar 10 at the covered location PC may be exposed. The upper member U1 may be connected to only one of the first and second side ribs S11 and S12 and may expose a portion of the upper surface 11 of the bus bar 10 through the gap g formed between the upper member U1 and the other one of the first and second side ribs S11 and S12. In the first embodiment, the main extension direction of the upper member U1 may correspond to the width direction of the bus bar 10. For example, as illustrated in FIG. 4, the upper member U1 may have a constant length in the second direction Z2 (that is to say, the upper members U1 may each have the same length in the second direction Z2).

Referring to FIGS. 6 to 7C, in a second embodiment of the disclosure, the holding unit H at the covered position PC (a holding unit H2 at first and second covered positions PC1 and PC2) may include a lower member L2 supporting a lower surface 12 of the bus bar 10, first and second side ribs S21and S22 that protrude from both sides of the lower member L2 to face each other and cover first and second sides 13 and 14 of the bus bar 10, and an upper member U2 extending across an upper surface 11 of the bus bar 10 between the first and second side ribs S21 and S22. The upper member U2, unlike the upper member U1 according to the first embodiment of the disclosure, may have a non-constant length in the second direction Z2, so it may include various portions extending from the first side rib S21 to directly contact the second side rib S22, only partially extend from the first side rib S21 to a position where the gap g is secured, or to partially expose the upper surface 11 of the bus bar 10 at the covered position PC.

As will be described below, in the second embodiment, the holding unit H2 at the first and second covered positions PC1 and PC2 may include the upper member U2 extending across the first and second side ribs S21 and S22 to cover the upper surface 11 of the bus bar 10, where the holding unit H2 at the first covered position PC1 may cover the entire upper surface 11 of the bus bar 10 (e.g., an entire width of the upper surface 11 of the bus bar 10 in the second direction Z2 perpendicular to the longitudinal direction of the bus bar 10), and the holding unit H2 at the second covered position PC2 may expose a portion of the upper surface 11 of the bus bar 10 through a jig hole ZH formed in the upper member U2. For example, in the second embodiment, the upper member U2 may cover the entire upper surface 11 (e.g., entire width of the upper surface 11) of the bus bar 10 at the covered position PC (the holding unit H2 at the first covered position PC1), and may follow the upper surface 11 of the bus bar 10 and cover the upper surface 11 of the bus bar 10 so as to extend in the longitudinal direction of the bus bar 10. In the second embodiment, the main extension direction of the upper member U2 may correspond to the longitudinal direction of the bus bar 10 (the holding unit H2 at the first covered position PC1).

In the first and second embodiments of the disclosure, the holding unit H at the covered position PC may restrain the position of the bus bar 10 in a vertical direction in which the upper and lower surfaces 11 and 12 of the bus bar 10 face each other and in a horizontal direction in which the first and second sides 13 and 14 of the bus bar 10 face each other. In embodiments of the disclosure, the holding unit H at the covered position PC (the upper member U1 and U2 of the holding unit H at the covered position PC) may partially or fully cover the upper surface 11 of the bus bar 10 between the first and second side ribs S11, S21, S12, and S22. Thus, the holding unit H may prevent the movement of the bus bar 10 in the horizontal direction in which the first and second sides 13 and 14 of the bus bar 10 covered by the first and second side ribs S11, S21, S12, and S22 face each other through the first and second side ribs S11, S21, S12, and S22, and may prevent the movement of the bus bar 10 in the vertical direction in which the upper and lower surfaces 11 and 12 of the bus bar 10 face each other through the upper member U1 and U2 and the lower member L1 and L2.

In the first and second embodiments, as the holding unit H at the covered position PC continuously surrounds the cross-section of the bus bar 10 to prevent the movement of the bus bar 10 in the vertical and horizontal directions of the bus bar 10 (e.g., as the lower member L1 and L2, the first and second side ribs S11, S21, S12, and S22, and the upper member U1 and U2 are formed continuously to surround the cross-section of the bus bar 10), the cell holder 150 may be molded to surround the cross-section of the bus bar 10, and the bus bar 10 may not be assembled into the cell holder 150 (which is molded separately from the bus bar 10) or the holding unit H at the covered position PC through a separate assembly process. For example, in some embodiments of the disclosure, as the holding unit H at the covered position PC continuously surrounds four transverse edges forming a cross-section of the bus bar 10, it may be difficult to assemble the bus bar 10 into the molded holding unit H at the covered position PC, and due to the upper member U1 and U2 and the lower member L1 and L2 facing each other in the vertical direction, and the first and second side ribs S11, S21, S12, and S22 facing each other in the horizontal direction, it may be difficult to secure an assembly position for fitting the bus bar 10 into the holding unit H at the covered position PC. In some embodiments of the disclosure, the cell holder 150 (the holding unit H at the covered position PC) may be molded to continuously surround four transverse edges forming the cross-section of the bus bar 10 through a molding process of the cell holder 150, and the holding unit H at the covered position PC that continuously surrounds the cross-section of the bus bar 10 may be molded from the molding process of the cell holder 150. For example, the bus bar 10 and the cell holder 150 may be assembled through the molding process of the cell holder 150 but not through an assembly process separate from the molding process of the cell holder 150.

In the first and second embodiments of the disclosure, the bus bar 10 may be embedded in the cell holder 150 through insert injection molding for molding the cell holder 150, e.g., the bus bar 10 may be surrounded by the holding unit H at the covered position PC. In the first and second embodiments of the disclosure, in the insert injection molding, molding resin may be injected to form the cell holder 150 into the mold where the bus bar 10 is temporarily fixed, and through demolding, which separates the mold after cooling and solidifying the molding resin, the cell holder 150 may be molded such that the bus bar 10 is embedded within the cell holder 150, e.g., the cross-section of the bus bar 10 is surrounded by the holding unit H.

In the first and second embodiments of the disclosure, as the cell holder 150 is molded through insert injection molding, the bus bar 10 may be embedded in the cell holder 150, e.g., the bus bar 10 may be embedded in the holding unit H at the covered position PC, and the cross-section of the bus bar 10 may be continuously surrounded by the holding unit H at the covered position PC. Thus, the main body of the cell holder 150 may be formed integrally with the holding unit H of the cell holder 150, and the lower members L1 and L2, the first and second side ribs S11, S21, S12, and S22, and the upper members U1 and U2 of the holding unit H may be formed integrally with each other, e.g., the bus bar 10 may form direct contact with the holding unit H at the covered position PC surrounding the cross-section of the bus bar 10. For example, in embodiments of the disclosure, the bus bar 10 and the holding unit H, e.g., the holding unit H at the covered position PC and the exposed position PE, may form direct contact with each other.

According to the present specification, that the bus bar 10 is embedded in the cell holder 150 refers to that at least the holding unit H at the covered position PC surrounds the cross-section of the bus bar 10, and that the cross-section of the bus bar 10 is surrounded at at least one location (covered position PC) in the longitudinal direction of the bus bar 10 crossing the cell holder 150. In other words, the holding unit H surrounds the cross-section of the bus bar 10 at the covered position PC among the covered position PC and the exposed position PE formed alternately in the longitudinal direction of the bus bar 10, e.g., the holding unit H surrounds four transverse edges of the bus bar 10.

For example, in embodiments of the disclosure, that the bus bar 10 is embedded in the cell holder 150 may not refer to that the holding unit H surrounds the cross-section of the bus bar 10 along the entire length of the bus bar 10 including the covered position PC and the exposed position PE or that the holding unit H surrounds the entire upper surface 11 forming the cross-section of the bus bar 10. For example, in some embodiments of the disclosure, the holding unit H at the covered position PC may expose a portion of the upper surface 11 of the bus bar 10 forming the cross-section of the bus bar 10 (the covered position PC of the first embodiment and the second covered position of the second embodiment). Even if the holding unit H at the covered position PC covers the entire upper surface 11 of the bus bar 10 (the first covered position PC1 of the second embodiment) or only a portion of the upper surface 11 (the covered position PC of the first embodiment and the second covered position PC2 of the second embodiment), it may be understood that the holding unit H at the covered position PC surrounds four transverse edges forming the cross-section of the bus bar 10.

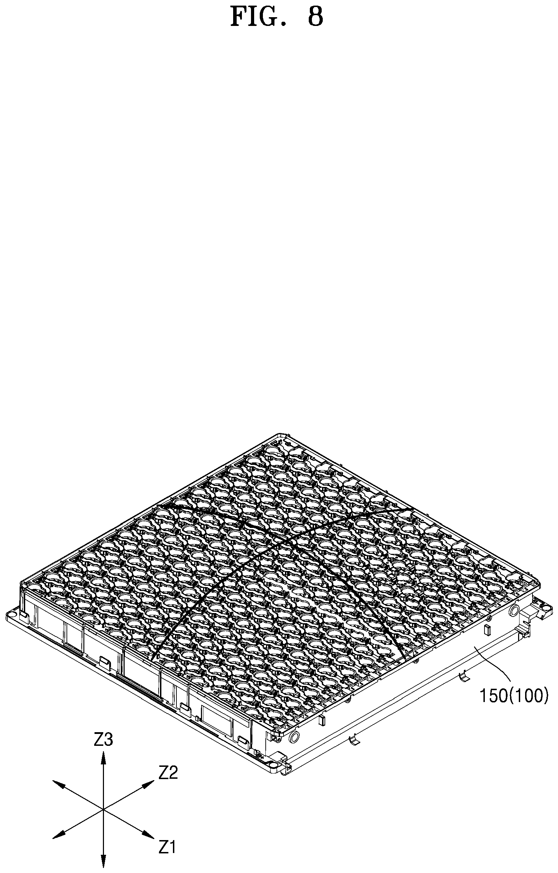

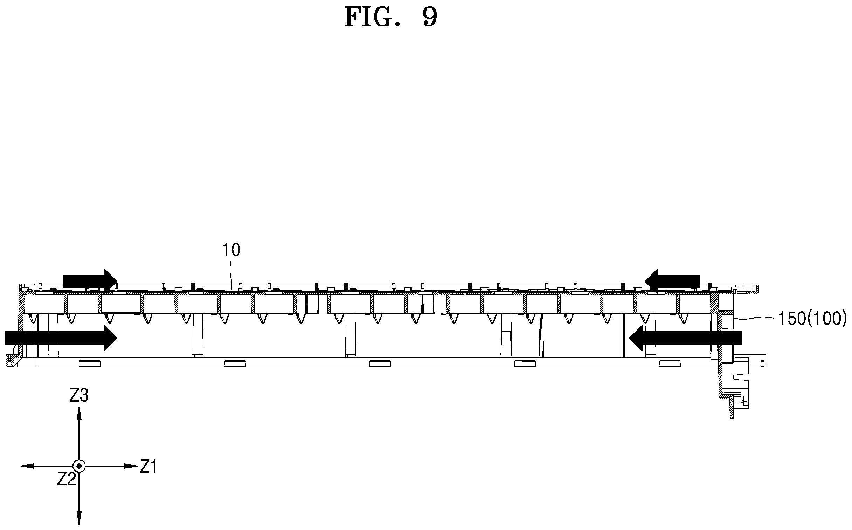

FIG. 8 is a perspective view illustrating bending deformation due to insert injection molding of different materials including a first material of the bus bar 10 and a second material of the cell holder 150. FIG. 9 is a cross-sectional view showing the difference in thermal contraction behavior between different materials including the first material of the bus bar 10 in the upper position and the second material of the cell holder 150 in the lower position, which causes bending deformation in the insert injection molded cell holder 150.

In the first and second embodiments, as the holding unit H at the covered position PC is molded such that the bus bar 10 is embedded in the holding unit H (which covers the upper surface 11 of the bus bar 10), the movement of the bus bar 10 in the vertical direction may be prevented. Further, the bending deformation in the insert injection molded cell holder 150 caused by different thermal contraction behaviors from the insert injection molding of different materials may be prevented.

In detail, referring to FIGS. 8 and 9, depending on the selection of specific materials of the bus bar 10 (e.g., a first material of the bus bar 10) and the cell holder 150 (e.g., a second material of the cell holder 150), which form the insert injection molded cell holder 150, thermal expansion coefficients or thermal contraction behaviors according to thermal expansion coefficients may be different from each other. As such, the insert injection molded cell holder 150 may be convexly curved upward or convexly curved downward due to different thermal contraction behaviors on the upper side of the cell holder 150 (i.e., where the bus bar 10 is placed) and on the lower side of the cell holder 150 (i.e., where the bus bar 10 is not placed), on the basis of the central level of the cell holder 150 in the third direction Z3.

For example, in embodiments of the disclosure, the bus bar 10 and the cell holder 150 may include different first and second materials that exhibit different thermal expansion coefficients or different thermal contraction behaviors. The bus bar 10 may include a first material containing a metal material, e.g., aluminum, copper, or nickel, and the cell holder 150 may include a second material containing a plastic material. Depending on the specific selection of the first and second materials, which form the bus bar 10 and the cell holder 150, respectively, bending deformation in the insert injection molded cell holder 150 may occur due to different thermal expansion coefficients or different thermal contraction behaviors.

In embodiments of the disclosure, as the bus bar 10 is embedded in the cell holder 150 (i.e., within the holding unit H at the covered position PC), the movement of the bus bar 10 in the vertical direction and the horizontal direction may be prevented, and the bending of the entire insert injection molded cell holder 150 due to the difference in thermal contraction behavior between the first and second materials of the bus bar 10 and the cell holder 150 may be suppressed by forming the cell holder 150 (e.g., the first material of the cell holder 150) above and below the bus bar 10 in the third direction Z3 that intersects first and second directions Z1 and Z2. For example, in embodiments of the disclosure, the holding unit H at the covered position PC may cover a portion of the upper surface 11 of the bus bar 10 or the entire upper surface 11 of the bus bar 10, and the first material of the cell holder 150 may be formed above the bus bar 10 through the upper members U1 and U2 of the holding unit H formed above the bus bar 10. By inducing balanced contraction between the first material of the cell holder 150 formed above the bus bar 10 and the first material of the cell holder 150 formed below the bus bar 10, e.g., by inducing contraction stress from both sides (e.g., opposite sides) onto the bus bar 10, bending of the entire insert injection molded cell holder 150 may be suppressed.

In embodiments of the disclosure, the bus bar 10 may be placed above a receiving space of the cell holder 150 (i.e., above a space where the battery cells are accommodated), and the upper members U1 and U2 of the holding unit H may be placed above the bus bar 10 in the third direction Z3. An assembly rib may be formed below the bus bar 10 (e.g., within the upper holder 100) to form the receiving space of the battery cells. For example, in embodiments of the disclosure, the assembly rib may surround at least a portion of the circumferential surface of each battery cell and regulate the assembly position of the battery cells.

Referring to FIG. 3, in embodiments of the disclosure, the first direction Z1 may refer to a direction in which he rows of the battery cells are arranged, and the second direction Z2 may be a direction that intersects the first direction Z1. For example, the battery cells in adjacent rows in the second direction Z2 may be located at positions that are relatively biased toward the front position and the rear position in the first direction Z1, e.g., adjacent rows may be offset relative to each other in the first direction Z1 to define a zigzag pattern in the second direction Z2. The third direction Z3 that intersects the first and second directions Z1 and Z2 may correspond to the vertical direction, and may refer to a direction in which the upper surface 11 and lower surface 12 of the bus bar 10 face each other or a direction in which the upper member U1 and U2 and the lower member L1 and L2, respectively covering the upper surface 11 and lower surface 12 of the bus bar 10, face each other. For example, referring to FIG. 1, a longitudinal direction of each battery cell 110 may extend in the third direction Z3.

Referring to the first and second embodiments shown in FIGS. 4 to 5B and FIGS. 6 to 7C, the holding unit H at the exposed position PE may include the lower members L1 and L2, respectively, supporting the lower surface 12 of the bus bar 10, and the first and second side ribs S11, S21, S12, and S22, which protrude from opposite sides of the lower members L1 and L2, respectively, to face each other and cover the first and second sides 13 and 14 of the bus bar 10. For example, the lower members L1 and L2 and the first and second side ribs S11, S21, S12, and S22 may continuously surround the transverse edges of the bus bar 10 at the exposed position PE. In the first and second embodiments of the disclosure, the lower members L1 and L2 and the first and second side ribs S11, S21, S12, and S22 may continuously cover the lower surface 12 and the first and second sides 13 and 14 of the bus bar 10 along the length of the bus bar 10 across the covered position PC and the exposed position PE alternately formed along the length of the bus bar 10.

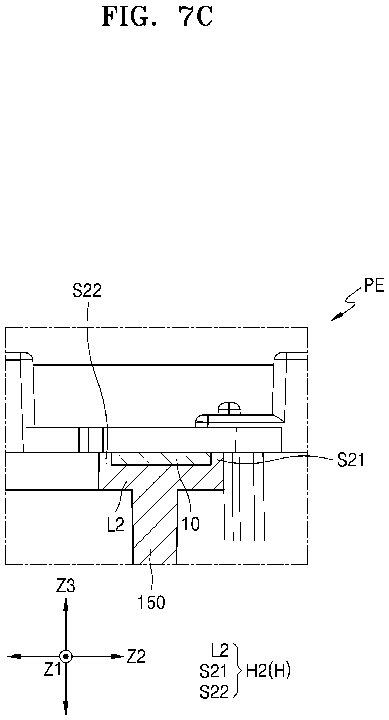

In the first and second embodiments of the disclosure, referring to FIGS. 5B and 7C, the holding unit H at the exposed position PE may expose the upper surface 11 of the bus bar 10 between the first and second side ribs S11, S21, S12, and S22. For example, in embodiments of the disclosure, the holding unit H at the exposed position PE may expose the entire upper surface 11 of the bus bar 10 between the first and second side ribs S11, S21, S12, and S22. However, as described above, the holding unit H at the covered position PC (e.g., the holding unit H at the covered position PC in the first embodiment and the holding unit H at the second covered position PC2 in the second embodiment) may expose a portion (e.g., only a portion) of the upper surface 11 of the bus bar 10 through the upper members U1 and U2 formed between the first and second side ribs S11, S21, S12, and S22.

For example, in embodiments of the disclosure, the holding unit H at the exposed position PE and the holding unit H at the covered position PC may each include the lower members L1 and L2 supporting the lower surface 12 of the bus bar 10, and the first and second side ribs S11, S21, S12, and S22 that protrude from both sides of the lower member L1 and L2, respectively, to face each other and cover the first and second sides 13 and 14 of the bus bar 10. The holding unit H at the exposed position PE may not include the upper members U1 and U2 between the first and second side ribs S11, S21, S12, and S22, respectively, and may expose the upper surface 11 of the bus bar 10, e.g., may expose the entire upper surface 11 of the bus bar 10, between the first and second side ribs S11, S21, S12, and S22, while the holding unit H at the covered position PC (e.g., the holding unit H at the covered position PC in the first embodiment and the holding unit H at the second covered position PC2 in the second embodiment) may expose only a portion of the upper surface 11 of the bus bar 10 between the first and second side ribs S11, S21, S12, and S22 through the upper member U1 and U2 between the first and second side ribs S11, S21, S12, and S22, respectively.

In embodiments of the disclosure, referring to FIG. 4, the holding unit H at the exposed position PE may expose the upper surface 11 of the bus bar 10, e.g., substantially the entire width of the upper surface 11 of the bus bar 10, to provide a location where a connecting member 20 is connected to the bus bar 10. For example, the connecting member 20 connected to the battery cells 110 may be connected to the upper surface 11 of the bus bar 10 exposed by the holding unit H at the exposed position PE. The connecting member 20 may form an electrical connection between the battery cells 110 and the bus bar 10. For example, a first end of the connecting member 20 may be connected (e.g., directly connected) to a battery cell 110, and a second end of the connecting member 20 may be connected (e.g., directly connected) to the bus bar 10.

In the first and second embodiments of the disclosure, the bus bar 10 may include the covered position PC and the exposed position PE (or the first and second covered positions PC1 and PC2 and the exposed position PE) formed alternately along the length of the bus bar 10 extending across the cell holder 150, and the connecting member 20 may be connected to the exposed position PE of the bus bar 10, rather than the covered position PC of the bus bar 10. Although the holding unit H at the covered position PC (e.g., the holding unit H at the covered position PC in the first embodiment and the holding unit H2 at the second covered position PC2 in the second embodiment) exposes a portion of the upper surface 11 of the bus bar 10 (e.g., the upper members U1 and U2 between the first and second side ribs S11, S21, S12, and S22 expose a portion of the upper surface 11 of the bus bar 10), the connecting member for connection to the battery cells may not be connected to the exposed portion of the upper surface 11 of the bus bar 10. For example, the connecting member may form an electrical connection between the battery cells and the bus bar 10 through wire bonding, e.g., a relatively flexible conductive wire, and performing wire bonding of the connecting member, e.g., the relatively flexible conductive wire, on the width of the bus bar 10, which is relatively narrowly limited by the upper member U1 and U2 between the first and second side ribs S11, S21, S12, and S22 may require strict process control, and may cause connection failure.

In the first and second embodiments of the disclosure, the holding unit H at the exposed position PE may restrain the position of the bus bar 10 in the horizontal direction in which the first and second sides 13 and 14 of the bus bar 10 face each other. For example, in the first and second embodiments, while the holding unit H at the covered position PC may restrain the position of the bus bar 10 in the vertical direction in which the upper surface 11 and the lower surface 12 of the bus bar 10 face each other and the horizontal direction in which the first and second sides 13 and 14 of the bus bar 10 face each other, the holding unit at the exposed position PE may restrain the position of the bus bar 10 in the horizontal direction in which the first and second sides 13 and 14 of the bus bar 10 face each other but may not restrain the position of the bus bar 10 in the vertical direction in which the upper surface 11 and the lower surface 12 of the bus bar 10 face each other.

In the first and second embodiments of the disclosure, the covered position PC and the exposed position PE (or the first and second covered positions PC1 and PC2 and the exposed position PE) may be formed alternately in the longitudinal direction of the bus bar 10 extending across the cell holder 150. It may be sufficient for the holding unit H at the exposed position PE to surround three transverse edges forming the cross-section of the bus bar 10 and prevent the movement of the bus bar 10 in the horizontal direction, because the holding unit H at the covered position PC surrounds four transverse edges forming the cross-section of the bus bar 10 and prevents movement of the bus bar 10 in the horizontal direction and the vertical direction. For example, the holding unit H at the exposed position PE may expose the entire upper surface 11 of the bus bar 10 to provide a position where the connecting member connected to the battery cells is connected thereto.

Referring to FIGS. 6 to 7C, in the second embodiment, the bus bar 10 may include the first covered position PC1, the second covered position PC2, and the exposed position PE along the length of the bus bar 10 extending across the cell holder 150, where the holding unit H2 at the first covered position PC1 may cover the entire upper surface 11 of the bus bar 10, the holding unit H2 at the second cover location PC2 may expose a portion of the upper surface 11 of the bus bar 10, and the holding unit H2 at the exposed position PE may expose the entire upper surface 11 of the bus bar 10.

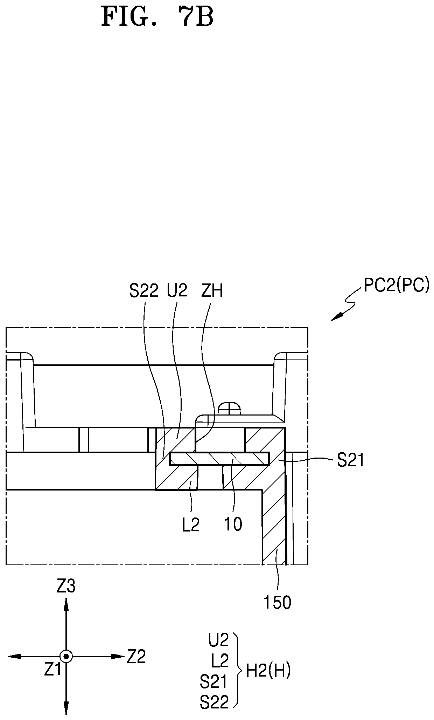

In embodiments of the disclosure, the holding unit H2 at the first and second covered positions PC1 and PC2 may include the lower member L2 supporting the lower surface 12 of the bus bar 10, the first and second side ribs S21 and S22 which protrude from both sides of the lower member L2 and cover the first and second sides 13 and 14 of the bus bar 10, and the upper member U2 extending across the upper surface 11 of the bus bar 10 between the first and second side ribs S21 and S22, where the upper member U2 at the first and second covered positions PC1 and PC2 may be connected to both first and second side ribs S21 and S22. For example, in embodiments of the disclosure, to cover the entire upper surface 11 of the bus bar 10 or expose a portion of the upper surface 11 of the bus bar 10, the upper member U2 at the first and second covered positions PC1 and PC2 may continuously extend from the first side rib S21 to the second side rib S22 which cover the first and second sides 13 and 14 of the bus bar 10, thereby covering the entire (e.g., width of the) upper surface 11 of the bus bar 10 (FIG. 7A), or may extend from the first side rib S21 toward the second side rib S22 which cover the first and second sides 13 and 14 of the bus bar 10 but have the jig hole ZH positioned therebetween which exposes a portion of the upper surface 11 of the bus bar 10 (FIG. 7B).

In embodiments of the disclosure, considering that the holding unit H2 surrounds an entire perimeter of the cross-section of the bus bar 10, the cell holder 150 including the holding unit H2 surrounding the cross-section of the bus bar 10 may be formed by a process of molding the cell holder 150 to surround the cross-section of the bus bar 10 without a separate assembly process, and the holding unit H2 surrounding the cross-section of the bus bar 10 may be formed through the molding process of the cell holder 150. In insert injection molding (where assembly of the cell holder 150 and the bus bar 10 are performed simultaneously), the cell holder 150 (the holding unit H2) surrounding the bus bar 10 may be molded through a process of temporarily fixing the bus bar 10 in a mold and injecting a molding resin to form the cell holder 150, while the temporarily fixing of the bus bar 10 for insert injection molding may be performed by pressing a fixing jig protruding to the inside of the mold to fix the position of the bus bar 10 inside the mold, and the jig hole ZH (in which the molding resin injected into the mold is excluded) may be formed as the fixing jig is in direct contact with the bus bar 10. For example, the holding unit H2 at the second cover location PC2 may expose a portion of the upper surface 11 of the bus bar 10 through the jig hole ZH, where the jig hole ZH is formed at the second covered position PC2 where access to the molding resin is not permitted as the fixing jig for temporarily fixing the bus bar 10 is in direct contact with the upper surface 11 of the bus bar 10. Forming the holding unit H (the holding unit H2 at the second covered position PC2) surrounding the cross-section of the bus bar 10 through insert injection molding may be different from forming the holding unit H at the exposed position PE (that exposes the upper surface 11 of the bus bar 10 for connection to the connecting member connected to the battery cells) and is also different from the holding unit H at the covered position PC that exposes the upper surface 11 of the bus bar 10 through the gap g (which is formed from the other one of the first and second side ribs S11 and S 12 as the upper member U1 is connected to only one of the first and second side ribs S11 and S12 which cover the first and second sides 13 and 14 of the bus bar 10 in the first embodiment).

Referring to FIG. 3, in embodiments of the disclosure, the plurality of battery cells forming the battery pack may be arranged in the first direction Z1. As battery cells in adjacent rows in the second direction Z2 intersecting the first direction Z1 are alternately biased toward the front position and the rear position in the first direction Z1, battery cells in a row in the first direction Z1 may be positioned in valleys between the battery cells in adjacent rows in the second direction Z2 to form a compact array of battery cells. In embodiments of the disclosure, the bus bar 10 may extend between the battery cells in adjacent rows in the second direction Z2 and may extend in a zigzag shape while alternately surrounding the outer peripheral surfaces of the battery cells in adjacent rows.

In embodiments of the disclosure, the length of the bus bar 10 extending across the cell holder 150 may generally follow the first direction Z1 in which the battery cells are arranged. However, in an arrangement of battery cells, each arranged to fit into the valley, the bus bar 10 may extend between the battery cells in adjacent rows in the second direction Z2 and may extend in a zigzag shape to alternately surround the outer peripheral surfaces of the battery cells in adjacent rows.

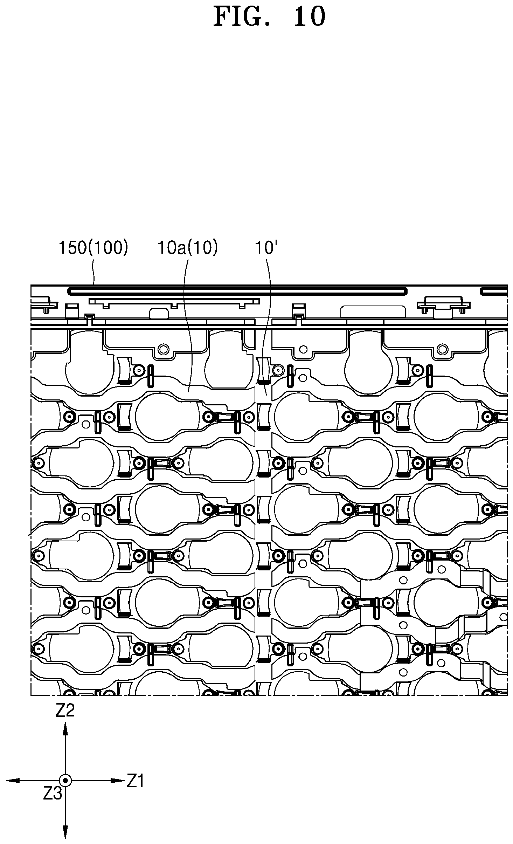

FIG. 10 is a diagram for explaining a third embodiment of the disclosure including an arrangement of bus bar segments 10a interrupted intermittently by break spaces 10' along the length of the bus bar 10 extending across the cell holder 150.

Referring to FIG. 10, in a third embodiment, the bus bar 10 embedded in the cell holder 150 may be interrupted intermittently by the break spaces 10' formed in the first direction Z1. For example, in embodiments of the disclosure, while fixing the position of the bus bar 10 in the vertical and horizontal directions through the holding unit H surrounding four transverse edges forming the cross-section of the bus bar 10, considering the structure of the holding unit H, which makes it difficult to secure the assembly position of the bus bar 10 into which the bus bar 10 is fitted, the holding unit H may be molded to surround the cross-section of the bus bar 10 and the upper member covering at least a portion of the upper surface 11 of the bus bar 10 may be formed to prevent bending of the cell holder 150 due to the different thermal expansion coefficients or different thermal contraction behaviors between the bus bar 10 and the holding unit H during insert injection molding of different materials of the bus bar 10 and the cell holder 150 including the holding unit H.

In the third embodiment of the disclosure, to prevent the bending of the cell holder 150 due to different thermal expansion or thermal contraction behaviors between the bus bar 10 and the cell holder 150, the bus bar 10 may be interrupted intermittently by the break spaces 10' in between, rather than being continuously connected to each other along the length of the bus bar 10 extending across the cell holder 150. As such, the contraction stress of the bus bar 10 caused by different thermal expansion coefficients or different thermal contraction behaviors between the first material forming the bus bar 10 and the second material forming the cell holder 150 may be relieved by the break spaces 10' that disconnect the neighboring bus bar segments 10a from each other, and by breaking the accumulated stress along the length of the bus bar 10 in units of the bus bar segments 10a through the break spaces 10'. Further, bending deformation of the cell holder 150 may be suppressed. In embodiments of the disclosure, the bus bar 10 formed on the cell holder 150 may be divided into a plurality of discrete bus bar segments 10a by the break spaces 10', and the cell holder 150 may be formed in a continuous form to provide a common support base for the different divided bus bar segments 10a.

In embodiments of the disclosure, the bus bar segments 10a disconnected from each other may be electrically connected to each other through the connecting member. For example, the connecting member may be formed through wire bonding of a conductive wire, e.g., the connecting member that electrically connects the battery cells to the bus bar 10. In embodiments of the disclosure, through a single wire bonding process, the electrical connection between the battery cells and the bus bar 10 and the electrical connection between the bus bar segments 10a may be formed all at once.

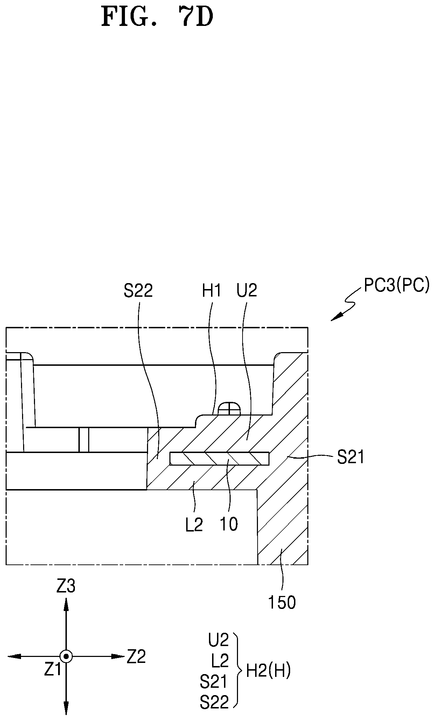

For reference, in this specification, the configurations of the different holding units H1 and H2 applied to the different positions IV and VI in FIG. 3 are described as different first and second embodiments, respectively, but as shown in FIG. 3, the configurations of the different holding units H1 and H2 provided in the first and second embodiments may be applied to different positions of the same battery pack or to different battery packs. For example, as shown in FIG. 7D, in the third covered position PC3 of the second embodiment, the different holding units H1 and H2 may be applied in combination, where the holding unit H1 applied to the covered position PC of the first embodiment and covering a portion of the upper surface 11 of the bus bar 10 may be vertically overlapped with the holding unit H2 applied to the first covered position PC1 of the second embodiment and covering the entire upper surface 11 of the bus bar 10. In the second embodiment, the first to third covered positions PC1, PC2, and PC3 and the exposed position PE may be arranged (e.g., cyclically) along the length of the bus bar 10.

According to the disclosure, provided is a battery pack capable of effectively preventing the movement of a bus bar by including a cell holder with a holding unit that embeds the bus bar by covering four transverse edges of a portion of the bus bar, which electrically connects different battery cells in the cell holder supporting the battery cells. The integrated (e.g., embedded) structure of the holding unit with the bus bar prevents the bending deformation of the cell holder due to different thermal contraction behaviors between different materials of the bus bar and the cell holder.

By way of summation and review, one or more embodiments include a battery pack capable of effectively preventing the movement of a bus bar by forming a holding unit where the bus bar is embedded to cover four transverse edges of the bus bar which electrically connects different battery cells in a cell holder which provides an assembly position of the plurality of battery cells and preventing the bending deformation of the cell holder due to different thermal contraction behaviors between different materials from insert injection molding of the different materials including a first material forming the bus bar and a second material forming the cell holder.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
battery cells;
a bus bar on the battery cells and electrically connecting at least some of the battery cells to each other, the bus bar having a cross-section including transverse edges, and the transverse edges corresponding to upper and lower surfaces opposite to each other and first and second sides opposite to each other and connecting the upper and lower surfaces; and
a cell holder accommodating the battery cells, the bus bar extending across the cell holder, and the cell holder including a holder that defines a covered position and an exposed position alternating along a length of the bus bar, the holder surrounding four transverse edges of the bus bar to define the covered position, and surrounding three transverse edges of the bus bar to define the exposed position.

2. The battery pack as claimed in claim 1, wherein the cross-section of the bus bar crosses a longitudinal direction of the bus bar and includes four transverse edges, the four transverse edges being the upper and lower surfaces and the first and second sides connecting the upper and lower surfaces.

3. The battery pack as claimed in claim 1 or 2, wherein the holder surrounds the transverse edges of the bus bar at the covered position and the exposed position.

4. The battery pack as claimed in claim 1, 2 or 3, wherein the bus bar is fixed in position together with the cell holder within the holder through insert injection molding.

5. The battery pack as claimed in any preceding claim, wherein the holder at the covered position includes:
a lower member supporting the lower surface of the bus bar;
first and second side ribs that protrude from opposite sides of the lower member to face each other, the first and second side ribs covering the first and second sides of the bus bar, respectively; and
an upper member extending across the upper surface of the bus bar between the first and second side ribs.

6. The battery pack as claimed in claim 5, wherein the lower member, the first and second side ribs, and the upper member continuously surround the transverse edges of the bus bar at the covered position.

7. The battery pack as claimed in claim 5 or 6, wherein the holder at the covered position is configured to restrain the bus bar in a vertical direction and a horizontal direction, the upper and lower surfaces of the bus bar being spaced apart from each other in the vertical direction, and the first and second sides of the bus bar being spaced apart from each other in the horizontal direction.

8. The battery pack as claimed in claim 5, 6 or 7, wherein the upper member exposes a portion of the upper surface of the bus bar at the covered position, and optionally
wherein the upper member extends across the upper surface of the bus bar in a width direction intersecting a longitudinal direction of the bus bar, and optionally
wherein the upper member is connected to only one of the first and second side ribs and exposes a portion of the upper surface of the bus bar through a gap between the upper member and the other one of the first and second side ribs.

9. The battery pack as claimed in any one of claims 5 to 7, wherein the upper member covers an entire width of the upper surface of the bus bar at the covered position, and optionally
wherein the upper member covers the upper surface of the bus bar while following the upper surface of the bus bar so as to extend along the length of the bus bar.

10. The battery pack as claimed in any preceding claim, wherein the holder at the exposed position includes:
a lower member supporting the lower surface of the bus bar; and
first and second side ribs that protrude from opposite sides of the lower member to face each other, the first and second side ribs covering the first and second sides of the bus bar, respectively.

11. The battery pack as claimed in claim 10, wherein the lower member and the first and second side ribs continuously surround the transverse edges of the bus bar at the exposed position, and/or
wherein the holder at the exposed position restrains the bus bar in a horizontal direction in which the first and second sides face each other.

12. The battery pack as claimed in claim 10 or 11, wherein the holder at the exposed position exposes the upper surface of the bus bar between the first and second side ribs, and optionally
the battery pack further comprising a connecting member connecting at least one of the battery cells to the upper surface of the bus bar exposed by the holder at the exposed position.

13. The battery pack as claimed in any preceding claim, further comprising a connecting member electrically connecting the bus bar to the battery cells through the exposed position.

14. The battery pack as claimed in any preceding claim, wherein:
the bus bar includes a first covered position, a second covered position, and an exposed position along the length of the bus bar extending across the cell holder,
the holder at the first covered position covers an entire width of an upper surface of the bus bar,
the holder at the second covered position exposes a portion of the width of the upper surface of the bus bar, and
the holder at the exposed position exposes the entire width of the upper surface of the bus bar, and optionally
wherein the holder at the first and second covered positions includes:
a lower member supporting the lower surface of the bus bar;
first and second side ribs that protrude from opposite sides of the lower member to face each other, the first and second side ribs covering the first and second sides of the bus bar, respectively; and
an upper member extending across the upper surface of the bus bar between the first and second side ribs, the upper member at the first and second covered positions being connected to both the first and second side ribs, and optionally
wherein:
the upper member at the first and second covered positions covers the upper surface of the bus bar while following the upper surface of the bus bar so as to extend along the length of the bus bar, and
the upper member at the second covered position includes a jig hole between the first and second side ribs, and exposes a portion of the upper surface of the bus bar through the jig hole.

15. The battery pack as claimed in any preceding claim, wherein:
the battery cells are arranged into rows, each of the rows extending in a first direction,
battery cells in adjacent ones of the rows in a second direction intersecting the first direction are alternately biased toward a front position and a rear position in the first direction,
battery cells in a row arranged in the first direction are positioned in a valley between the battery cells in adjacent rows in the second direction, and
the bus bar extends in a zigzag shape while alternately surrounding outer peripheral surfaces of the battery cells in adjacent rows along spaces between the battery cells in adjacent rows in the second direction.
